(19) **Europäisches Patentamt**

**European Patent Office**

**Office européen des brevets**

(11) **EP 0 718 235 B1**

(12) **EUROPÄISCHE PATENTSCHRIFT**

(45) Veröffentlichungstag und Bekanntmachung des Hinweises auf die Patenterteilung:
**05.03.1997 Patentblatt 1997/10**

(51) Int. Cl.$^6$: **C01B 6/06**

(21) Anmeldenummer: **95119466.1**

(22) Anmeldetag: **11.12.1995**

(54) **Verfahren zur Herstellung von ether- und halogenidfreiem Aluminiumwasserstoff**

Method for the preparation of ether- and halogenide-free aluminium hydride

Méthode de préparation d'hydrure d'aluminium exempt d'éther et d'halogénure

(84) Benannte Vertragsstaaten:
**BE DE FR GB IT NL**

(30) Priorität: **24.12.1994 DE 4446516**

(43) Veröffentlichungstag der Anmeldung:
**26.06.1996 Patentblatt 1996/26**

(73) Patentinhaber: **Th. Goldschmidt AG**
**D-45127 Essen (DE)**

(72) Erfinder:
- **Klapdor, Astrid**
  **D-45147 Essen (DE)**
- **Knott, Wilfried, Dr.**
  **D-45141 Essen (DE)**
- **Windbiel, Dagmar**
  **D-45289 Essen (DE)**

(56) Entgegenhaltungen:
EP-A- 0 594 014          US-A- 3 758 677
US-A- 3 801 657          US-A- 4 006 095

**Beschreibung**

Die Erfindung betrifft die wirschaftiche Herstellung von ether- und halogenidfreiem Aluminiumwasserstoff.

Verfahren zur Herstellung etherhaltiger bzw. in Ethern gelöster Aluminiumwasserstoffpräparate gehören bereits lange zum Stand der Technik.

Finholt, Bond und Schlesinger (J. Am. Chem. Soc. 69, 1199 (1947)) beschreiben die Herstellung von Aluminiumwasserstoff $AlH_3$ in Diethylether aus $AlCl_3$ und LiH gemäß

$$AlCl_3 + 3\ LiH \rightarrow AlH_3 + 3\ LiCl$$

Diese Reaktion geht jedoch leicht bis zum Lithiumaluminiumhydrid $LiAlH_4$ durch, das sich in exothermer Reaktion gemäß

$$AlH_3 + LiH \rightarrow LiAlH_4$$

bildet.

Zweckmäßiger stellt man entsprechend Ullmann's Encyclopedia of Industrial Chemistry, Vol. A 13, S. 213 - 14 (1989) Aluminiumhydrid ausgehend von Lithiumalanat durch Reaktion mit Aluminiumchlorid oder Mineralsäuren in Diethylether dar

$$3\ LiAlH_4 + AlCl_3 \rightarrow 4\ AlH_3 + 3\ LiCl$$

$$LiAlH_4 + HX \rightarrow AlH_3 + LiX + H_2$$

(HX = HCl oder $H_2SO_4$).

Die Verwendung des aufwendigen und in seiner Handhabung nicht ungefährlichen Lithiumaluminiumhydrids ist bei dieser Synthese nachteilig.

Man hat daher frühzeitig versucht, das komplexe Hydrid $LiAlH_4$ durch andere Lithium-freie Hydride zu ersetzen und so $AlH_3$ zugänglich zu machen.

So ist aus der US-PS 3 829 390 die Herstellung von stabilen Chlorid- und Lithiumsalz-freien $AlH_3$-Lösungen in niederen Dialkylethern unter Verwendung von Natriumaluminiumhydrid gemäß

$$3\ NaAlH_4 + AlCl_3 \rightarrow 4\ AlH_3 + 3\ NaCl$$

bekannt. Die Vermeidung der Verwendung von Lithium enthebt dieses Verfahren jedoch nicht der Notwendigkeit, ein auf aufwendigem Wege erzeugtes Alkalialuminiumhydrid einsetzen zu müssen.

Abwandlungen des Schlesinger-Prozesses für die Gewinnung ether- und halogenidfreier $AlH_3$-Präparate sind in großer Zahl referiert. So lehrt die US-PS 4 006 095 ein Verfahren zur Herstellung beständiger $AlH_3$-Lösungen in Benzol und/oder Toluol, dadurch gekennzeichnet, daß man 3 Mol eines Alkalimetallhydrids mit 1 Mol Aluminiumhalogenid in bezeichneten Aromaten in Gegenwart einer weichen Etherbase umsetzt und ein tertiäres Amin zur Stabilisierung hinzufügt. Des weiteren bedarf dieses Verfahren einer kleinen Menge Lithiumalanats als Initiator. Der beanspruchte Zweiphasenprozeß ist zu aufwendig und stellt somit keine technische Lösung dar.

US-PS 3 971 846 beschreibt die Herstellung etherfreien Aluminiumhydrids ausgehend von Lithiumaluminiumhydrid und Berylliumboranat $Be(BH_4)_2$. Eingedenk der Toxizität von Berylliumverbindungen ist diese Methode nicht praktikabel.

Ausgehend von den kostspieligen Ausgangsverbindungen Lithium- bzw. Natriumaluminiumhydrid verzeichnet die Patentliteratur eine Reihe weiterer Präparationsverfahren für spezielle $AlH_3$-Zubereitungen: US-PS 3 857 930, US-PS 3 829 390, US-PS 3 822 342, US-PS 3 819 819, US-PS 3 801 657, US-PS 3 758 677.

Wie bereits zuvor ausgeführt, sind Verfahren basierend auf diesen in ihrer Handhabung nicht ungefährlichen und außerdem kostspieligen Hydridquellen unvorteilhaft. Ullmann's Encyclopedia (loc.cit.) führt hierzu aus, daß trotz einer großen Zahl potentieller Anwendungsmöglichkeiten $AlH_3$ bisher nicht kommerziell verfügbar ist.

Es hat daher nicht an Versuchen gefehlt, Magnesiumhydrid zur Herstellung von Aluminiumwasserstoff bzw. hieraus abgeleiteten Verbindungen zu verwenden.

Wiberg und Bauer gelangten zu der Auffassung, daß die Schlesinger-analoge Reaktion mit $MgH_2$ in Diethylether Magnesiumaluminiumwasserstoff der Formel $Mg(AlH_4)_2$ hervorbringt (Zeitschrift für Naturforschung 5b, 397 (1950) und 4b, 131 (1952) sowie DE-PS 845 338). Ashby belegte jedoch später in Inorg. Chem. 9, S. 325 - 326 (1970), daß bei dieser Reaktion hydrogenolytisch erzeugtes $MgH_2$ mit Aluminiumhalogenid zu Halogenmagnesiumalanat $XMgAlH_4$ reagiert.

Aus der BE-A-785 348 ist ein Verfahren zur Herstellung von $AlH_3$ bzw. $Mg(AlH_4)_2$ durch Reaktion von $MgH_2$ mit $AlCl_3$ in Gegenwart von Aluminium in Diethylether bekannt:

$$2\ AlCl_3 + 3\ MgH_2 + Al \rightarrow 2\ AlH_3 + 3\ MgCl_2 + Al$$

$$2\ AlCl_3 + 4\ MgH_2 + Al \rightarrow Mg(AlH_4)_2 + 3\ MgCl_2 + Al$$

Experimenteller Nachweis zum Beweis des Ablaufes der Reaktion und zur Natur der Verfahrensprodukte wurde nicht gegeben, was bereits Ashby (loc.cit.) bemängelte.

Das Verfahren des US-Patentes 4 832 934 greift erneut die Reaktion von $MgH_2$ mit Aluminiumhalogenid in cyclischen oder aliphatischen Ethern auf, wobei das hier verwendete hochaktive $MgH_2$ gemäß einem Verfahren der EP-B-003 564 hergestellt wird. Die Umsetzung dieses besonderen, durch komplexe Katalysatorsysteme zugänglichen Magnesiumhydrids mit Aluminiumhalogenid führt zu Verbindungen der allgemeinen Formel

$$[Mg_2X_3(Ether)_y]^+[AlH_4]^-$$

wobei X ein Halogen, Ether ein cyclischer oder aliphatischer Ether und y eine Zahl von 0 bis 6 ist. Dabei wird in der US-PS ausdrücklich darauf hingewiesen, daß dieses Produkt unter Verwendung von handelsüblichem $MgH_2$ trotz Aufmahlung, also mechanischer Aktivierung, nicht hergestellt werden kann. Dies wird auch in einem Vergleichsbeispiel gezeigt. Die Verwendung der in der EP-A- 003 564 beschriebenen komplexen Katalysatorsysteme zur Herstellung von aktivem Magnesiumhydrid ist bei diesem Verfahren somit zwingend erforderlich. Durch Zusatz von Dioxan ist es möglich, aus dem vorgenannten Verfahrensprodukt 1 Mol $MgX_2$ abzutrennen. Man erhält dann ein Produkt der Formel $XMgAlH_4$. $AlH_3$ läßt sich auf diesem Wege somit nicht herstellen.

Die EP-A-594 014 befaßt sich mit dem Problem, billige und nach der Lehre der US-PS 4 832 934 infolge ihrer Inaktivität unbrauchbare Magnesiumhydride, die unter Verzicht auf die vorgenannten komplexen Katalysatoren bei hohen Temperaturen aus den Elementen gewonnen werden, für die Herstellung komplexer Halogen-Magnesium-Aluminiumhydridohalogenide einzusetzen. Durch Aufmahlung von Magnesiumhydrid mit Aluminiumhalogenid in aliphatischen oder cycloaliphatischen Ethern mit 2 bis 30 Kohlenstoffatomen (ausgenommen tert.-Butylether und 1,4-Dioxan) entstehen abweichend von der Lehre der US-PS 4 832 934 Verbindungen der allgemeinen Formel

$$[Mg_2X_3(Ether)_y]^+[AlH_{4-n}X_n]^-$$

wobei X Halogen, y eine Zahl von 0 bis 6, n eine Zahl von 1 bis 3 und Ether ein aliphatischer oder cycloaliphatischer Ether mit 2 bis 30 Kohlenstoffatomen (ausgenommen tert.-Butylether und 1,4-Dioxan) mit einem Dipolmoment > 0,5 D und einem Schmelzpunkt < 0 °C ist.

Dabei hat sich bei diesem Verfahren $MgH_2$, welches nach dem Verfahren der EP-B-490 156 hergestellt worden ist, als besonders brauchbar erwiesen. Bei diesem Verfahren wird als Katalysator für die Hydrierung des Magnesiums $MgH_2$ verwendet, welches dem zu hydrierenden Magnesium vor Beginn der Reaktion in Mengen von mindestens 1,2 Gew.-% und mit einer Teilchengröße von < 400 µm zugesetzt wird. Im folgenden wird dieses Magnesiumhydrid als "autokatalytisch hergestelltes Magnesiumhydrid" bezeichnet.

Die DE-OS 43 36 602 lehrt ein Verfahren zur Herstellung von Aluminiumwasserstoff, wobei man ein Magnesiumhydrid verwendet, welches durch Umsetzung von Magnesium mit Wasserstoff bei einer Temperatur von > 250 °C und einem Druck von 0,5 bis 5 MPa unter der Maßgabe erhältlich ist, daß man dem zu hydrierenden Magnesium vor der Hydrierung Magnesiumhydrid einer Teilchengröße von < 400 µm in Mengen von mindestens 1,2 Gew.-%, bezogen auf zu hydrierendes Magnesium, zusetzt, und die Reaktion unter ständiger Aufmahlung der Reaktanden $MgH_2$ und $AlX_3$ (X = Halogen) im Molverhältnis von mindestens 3 : 2 in 1,4-Dioxan innerhalb eines Temperaturbereiches von 20 bis 110 °C während eines Zeitraumes von 30 Minuten bis 5 Stunden durchführt.

Hierbei werden Lösungen von Aluminiumwasserstoff in 1,4-Dioxan erhalten, bei denen die Verwendung autokatalytisch hergestellten Magnesiumhydrids besonders wirtschaftlich ist und die, durch die Verwendung von Dioxan, halogenidfrei sind. Ein Zugang zu etherfreiem Aluminiumwasserstoff ist hiermit aber keinesfalls gegeben.

Die vorliegende Erfindung beschäftigt sich daher mit den technischen Problem, ether- und halogenidfreien Aluminiumwasserstoff auf Basis des einfach zugänglichen Magnesiumhydrids in guten Ausbeuten und mit hoher Reinheit herzustellen. Eine besondere Zielsetzung ist hierbei, ausgehend von den leicht herstellbaren Halogen-Magnesium-Aluminiumhydridohalogeniden eine Synthese zu erschließen, die ether- und halogenidfreie $AlH_3$-Präparate liefert, die direkt, in Form einer Lösung oder als Festsubstanz, für Reduktionszwecke einsetzbar sind.

Überraschenderweise wurde gefunden, daß die Lösung dieses Problems durch ein Verfahren gelingt, welches erfindungsgemäß dadurch gekennzeichnet ist, daß man aus Halogen-Magnesium-Aluminiumhydridohalogeniden, die ggfs. in Tetrahydrofuran (THF)-Lösungen vorliegen, der allgemeinen Formel

$$[Mg_2X_3(THF)_y]^+[AlH_3X]^-$$

wobei

X    Chlor, Brom oder Jod,
y    eine Zahl von 0 bis 6,

durch aufeinanderfolgende Zugabe von Hexan und Toluol unter sukzessivem Abdestillieren von Hexan und ggf. THF bei Siedetemperaturen bis zu 90 °C den komplexgebundenen Magnesiumhalogenidanteil ausfällt und abtrennt.

Erhalten werden Lösungen von $AlH_3$ in Toluol, die direkt für Reduktionszwecke einsetzbar sind oder aber nach Entfernen des Lösungsmittels festen Aluminiumwasserstoff liefern.

Dieses Ergebnis ist für den Fachmann umso erstaunlicher, da bei Verwendung von Kohlenwasserstoffen bzw. Kohlenwasserstoffgemischen als Mittel zur Freisetzung von $AlH_3$ aus den komplexen Halogen-Magnesium-Aluminiumhydridohalogeniden die bei Verwendung von 1,4-Dioxan als Fällagenz bewirkte Stabilisierung der Magnesiumhalogenide in Form ihrer Dioxanate als auch die Etherstabilisierung des in Lösung bleibenden Aluminiumwasserstoffs entfallen.

Von wesentlicher Bedeutung für die Durchführung des erfindungsgemäßen Verfahrens ist die Beachtung einer Temperaturobergrenze, damit der bei der Entkomplexierung aus den Halogen-Magnesium-Aluminiumhydridohalogeniden freigesetzte Aluminiumwasserstoff nicht zersetzt wird. Eine Temperatur von 90 °C ist daher nicht zu überschreiten.

Bei der erfindungsgemäßen Verfahrensweise werden THF-Lösungen von komplexen Halogen-Magnesium-Aluminiumhydridohalogeniden zunächst mit Hexan versetzt und auf Siedetemperatur erhitzt, wobei die bei Raumtemperatur bereits einsetzende Ausfällung des komplex gebundenen Magnesiumhalogenidanteils vervollständigt wird. Bei der Abdestillation des Lösemittelgemisches wird das aus dem komplexen Hydrid stammende THF entfernt und durch frisches Hexan ersetzt.

Nach Abtreiben der zugesetzten Lösemittelmenge wird Toluol zugegeben und die Destillation fortgesetzt, wobei die Kopftemperatur allmählich ansteigt. Die Destillation wird fortgeführt, bis die Kopftemperatur einen Wert von etwa 90 °C erreicht.

Man erhält eine ether- und chloridfreie Lösung von $AlH_3$ in Toluol, die in bekannter Weise vom ausgefällten Magnesiumhalogenid abgetrennt wird und bis zur gewünschten Konzentration - unter Beachtung der Temperaturobergrenze - eingeengt werden kann. Die erhaltene Lösung von Aluminiumwasserstoff ist direkt für Reduktionszwecke einsetzbar. Bei Bedarf läßt sich der Aluminiumwasserstoff auch in Form eines farblosen, hochaktiven Hydridpulvers aus der Lösung isolieren und gegebenenfalls in anderen Solventien aufnehmen.

Vorteilhaft ist die Menge des hinzugefügten Hexans so zu bemessen, daß sie der 1,5- bis 2,5-fachen THF-Menge in der Ausgangslösung entspricht, so daß die Destillation bereits einen nahezu etherfreien Aluminiumwasserstoff im Sumpfkolben liefert.

Bei Nichteinhaltung des erfindungsgemäßen Lösungsmittelaustausches ist es nicht möglich, den Aluminiumwasserstoff in fester Form als hochaktives Hydridpulver aus der organischen Matrix abzuscheiden (siehe Vergleichsbeispiel 3).

Insbesondere ist sonst mit dem Auftreten unerwünschter Spaltprodukte aus dem, bei der Synthese des Halogen-Magnesium-Aluminiumhydridohalogenids verwendeten, Ether zu rechnen, falls die aus den physikalischen Daten der verwendeten Lösemittel sich ergebende Temperaturführung mißachtet wird.

Beispiel 1

Herstellung einer Lösung von Chlor-Magnesium-Aluminiumhydridochlorid in THF

6,5 g (0,225 mol) Magnesiumhydrid (Hydridgehalt 91 %) werden in 400 g Tetrahydrofuran suspendiert und durch Aufmahlung in einer Glaskugelmühle aktiviert. 20 g (0,15 mol) Aluminiumchlorid, gelöst in 160 g Tetrahydrofuran, werden langsam hinzugetropft, wobei eine leichte Wärmeentwicklung feststellbar ist. Nach beendetem Zutropfen wird der Reaktionsansatz unter weiterer, ständiger Aufmahlung auf Rückflußtemperatur erhitzt. Nach einer Stunde läßt man den Ansatz abkühlen und arbeitet dann unter Zentrifugieren auf. Es werden 500 g eines klaren Überstandes mit einem Hydridgehalt von 1,0 mMol H/g Lösung isoliert (gasvolumetrische Wasserstoffbestimmung).

Beispiel 2

Herstellung von Aluminiumwasserstoff

350 g der in Beispiel 1 hergestellten Chlor-Magnesium-Aluminiumhydridochloridlösung werden in einem 1-l-Vierhalskolben bei Raumtemperatur vorgelegt und unter Rühren mit 250 ml Hexan versetzt. Während dieser Zugabe ist bereits eine Ausfällung von Magnesiumchlorid zu beobachten. Der Ansatz wird auf Rückflußtemperatur erhitzt, wobei über eine aufgesetzte Destillationsbrücke 250 ml eines Gemisches aus THF und Hexan abgezogen werden. Während des Abdestillierens vervollständigt sich die Ausfällung des Magnesiumsalzes einhergehend mit einem starken Viskositätsanstieg. Daraufhin wird der Inhalt des Sumpfkolbens noch zweimal mit je 250 ml Hexan versetzt und das Abdestillieren sukzessive fortgesetzt. 200 ml Toluol werden hinzugefügt und man destilliert bis eine Kopftemperatur von 90 °C erreicht ist.

Nach Abkühlen wird der Ansatz über eine P4-Glasfritte filtriert und der erhaltene, voluminöse Filterkuchen zur Vermeidung von Verlusten zweimal mit je 40 ml absolutierten Toluols gewaschen. Eine komplexometrische Analyse des Filterkuchens belegt Aluminiumfreiheit.

Das erhaltene, klare Filtrat wird im Ölpumpenvakuum bei Raumtemperatur eingeengt. Man erhält 3,4 g (97 % d. Th.) eines nahezu farblosen, Magnesiumhalogenid-freien Pulvers, das gemäß gasvolumetrischer Hydrid- und komplexometrischer Aluminiumbestimmung der stöchiometrischen Zusammensetzung von $AlH_3$ entspricht. Zur weiteren Charakterisierung wird eine infrarotspektroskopische Aufnahme des Produktes in Form einer Nujol-Verreibung angefertigt. Die Bandenlagen bei 1886,6 und 1791,7 Wellenzahlen belegen die Präsenz von Aluminiumwasserstoff. Zugabe von Methanol zur Nujol-Verreibung führt unter Wasserstoffentwicklung zu einer Löschung dieser Signale.

Beispiel 3

(Vergleichsbeispiel)

350 g einer analog Beispiel 1 hergestellten Chlor-Magnesium-Aluminiumhydridochloridlösung (1 mMol H/g Lösung) werden in einem 1-l-Vierhalskolben bei Raumtemperatur vorgelegt und unter Rühren mit 200 ml Toluol versetzt. Während dieser Zugabe ist eine leichte Ausfällung von Magnesiumchlorid zu beobachten. Der Ansatz wird auf Rückflußtemperatur erhitzt, wobei über eine aufgesetzte Destillationsbrücke 250 ml eines Gemisches bestehend aus THF und Toluol abgezogen werden. Hierbei vermehrt sich die Ausfällung von Feststoff beträchtlich. Man destilliert bis eine Kopftemperatur von 90 °C erreicht ist.

Nach Abkühlen wird der Ansatz über eine P-4-Glasfritte filtriert und der erhaltene Filterkuchen zur Vermeidung von Verlusten zweimal mit je 40 ml absolutierten Toluols gewaschen.

Das klare Filtrat wird im Ölpumpenvakuum bei Raumtemperatur eingeengt. Man erhält 5,3 g eines gelben, hochviskosen Öls, das gemäß komplexometrischer Aluminiumbestimmung nur noch etwa 1/3 der eingesetzten Aluminiummenge enthält. Eine gasvolumetrische Wasserstoffbestimmung belegt ein Aluminium/Wasserstoff-Verhältnis von 1 : 1,2.

## Patentansprüche

1. Verfahren zur Herstellung von toluolischen Lösungen eines ether- und halogenidfreien Aluminiumwasserstoffs, dadurch gekennzeichnet, daß man aus Halogen-Magnesium-Aluminiumhydridohalogeniden, die ggfs. in Tetrahydrofuran(THF)-Lösungen vorliegen, der allgemeinen Formel

$$[Mg_2X_3(THF)_y]^+[AlH_3X]^-$$

wobei

X    Chlor, Brom oder Jod,
y    eine Zahl von 0 bis 6,

durch aufeinanderfolgende Zugabe von Hexan und Toluol unter sukzessivem Abdestillieren von Hexan und ggf. THF bei Siedetemperaturen bis zu 90 °C den komplexgebundenen Magnesiumhalogenidanteil ausfällt und abtrennt.

2. Verfahren zur Herstellung von ether- und halogenidfreiem Aluminiumwasserstoff, dadurch gekennzeichnet, daß man aus den nach Anspruch 1 erhaltenen Lösungen den Aluminiumwasserstoff in an sich bekannter Weise isoliert.

## Claims

1. Process for preparing toluene solutions of an ether- and halide-free aluminium hydride, characterized in that halomagnesium aluminium hydridohalides, which may be present in tetrahydrofuran (THF) solutions, of the general formula

$$[Mg_2X_3(THF)_y]^+[AlH_3X]^-$$

where

X    is chlorine, bromine or iodine,
y    is a number from 0 to 6,

have the complexed magnesium halide part precipitated and separated off from them by successive addition of hexane and toluene with gradual distilling off of hexane and possibly THF at boiling temperatures up to 90°C.

2. Process for preparing ether- and halide-free aluminium hydride, characterized in that the aluminium hydride is isolated in a manner known per se from the solutions obtained according to Claim 1.

## Revendications

1. Procédé de préparation de solutions de toluène et d'un hydrure d'aluminium exempt d'éther et d'halogénure, caractérisé en ce qu'à partir d'hydrurohalogénures d'halogène-magnésium-aluminium, qui sont éventuellement présents dans des solutions de tétrahydrofuranne (THF), répondant à la formule générale

$$[Mg_2X_3(THF)_y]^+[AlH_3X]^-$$

où

X    est le chlore, le brome ou l'iode,
y    est un nombre de 0 à 6,

par addition successive d'hexane et de toluène, avec élimination successive d'hexane et éventuellement de THF par distillation, à des températures d'ébullition allant jusqu'à 90°C, on fait précipiter et on sépare la partie halogénure de magnésium liée au complexe.

2. Procédé de préparation d'hydrure d'aluminium exempt d'éther et d'halogénure, caractérisé en ce qu'on isole l'hydrure d'aluminium d'une manière connue en soi à partir des solutions obtenues selon la revendication 1.